**Europäisches Patentamt**

**European Patent Office**

**Office européen des brevets**

(19)

(11) Numéro de publication : **0 368 704 B1**

(12)

# FASCICULE DE BREVET EUROPEEN

(45) Date de publication du fascicule du brevet :
**19.11.92 Bulletin 92/47**

(51) Int. Cl.⁵ : **B60R 25/02, F16D 15/00**

(21) Numéro de dépôt : **89402851.3**

(22) Date de dépôt : **16.10.89**

(54) **Serrure de blocage de direction pour véhicule automobile.**

(30) Priorité : **25.10.88 FR 8813906**

(43) Date de publication de la demande :
**16.05.90 Bulletin 90/20**

(45) Mention de la délivrance du brevet :
**19.11.92 Bulletin 92/47**

(84) Etats contractants désignés :
**DE ES GB IT**

(56) Documents cités :
**FR-A- 2 118 265**
**US-A- 1 843 114**

(73) Titulaire : **ANTIVOLS SIMPLEX**
**3, rue de la Brot Zone Industrielle Nord**
**F-21059 Dijon-Saint-Apollinaire (FR)**

(72) Inventeur : **Thirion, André**
**28, Avenue de la République**
**F-21800 Chevigny-Saint-Sauveur (FR)**

(74) Mandataire : **Lemaire, Marc**
**VALEO Service Propriété Industrielle 30, rue Blanqui**
**F-93406 Saint-Ouen Cédex (FR)**

## Description

L'invention concerne une serrure de blocage de direction pour véhicule automobile du type défini dans le préambule de la revendication 1 et connu par exemple du document US-A-1 843 114.

Dans la plupart des antivols de direction, les organes de verrouillage sont constitués par un ou plusieurs pênes coopérant avec une ou plusieurs fentes ménagées dans un manchon ou une cuvette solidaire de l'arbre de direction ou du volant.

Ces serrures connues présentent l'inconvénient que, quel que soit le nombre des pênes, le blocage angulaire de l'arbre de direction n'intervient, après avoir amené la serrure en position de verrouillage, qu'après une certaine rotation pour amener le pêne de verrouillage ou tous les pênes de verrouillage en regard d'ouvertures correspondantes du manchon ou de la cuvette. Il s'ensuit une certaine absence de sécurité, le véhicule étant en général laissé sans effectuer cette manoeuvre supplémentaire, ce qui facilite les tentatives de vol.

Si l'utilisateur veut éviter ce risque, il doit effectuer cette manoeuvre qui demande un certain effort et entraîne en outre, lors du déverrouillage, un certain effort en sens contraire pour libérer le pêne en général en appui de cisaillement contre un bord de l'ouverture.

Ces serrures sont en outre compliquées du fait des ressorts de rappel pour les pênes de verrouillage afin de leur permettre de rester effacés tant qu'ils ne sont pas en regard de l'ouverture réceptrice de l'arbre de direction. En outre, le couple résistant de telles serrures est limité, ce qui nuit à la sécurité qu'elles apportent.

On a également proposé de munir une telle serrure d'un système de coincement par billes ou rouleaux comme illustré dans le document US-A-1 843 114 mais toutes les solutions proposées n'ont donné lieu à aucun produit industriel du fait de leur complication et de leur insuffisance de sûreté.

La présente invention vise à fournir une serrure du type décrit à l'introduction ne présentant pas les inconvénients des serrures connues et qui assure en particulier un blocage et un déblocage instantanés de l'arbre de direction en toute position angulaire, sans mouvement supplémentaire ni effort, dès que la serrure est amenée en position de verrouillage ou de déverrouillage respectivement. En outre, la serrure selon l'invention est simple, robuste et économique, peu encombrante, facile à commander par un verrou électrique, et elle résiste à un couple pratiquement infini grâce à un effet de coincement.

A cet effet, la présente invention propose une serrure de blocage de direction pour véhicule automobile du type signalé en introduction et présentant en outre les caractéristiques définies dans la partie caractérisante de la revendication 1.

Lorsque l'organe de verrouillage respectif n'agit pas sur le rouleau ou la bille, celui-ci est en appui sur la périphérie de l'arbre de direction et, sous l'effet des moyens de rappel élastique, il se produit un coincement de l'arbre, dans un sens de rotation, contre l'un des rouleaux ou billes et, dans l'autre sens, contre l'autre rouleau ou bille.

Selon une autre caractéristique de l'invention les parois de chaque logement tournées vers l'extérieur sont reliées par une paroi concave du boîtier, ladite paroi formant un berceau à l'arbre de direction.

De préférence, les organes de déverrouillage sont formés par deux branches d'un organe en forme de fourche actionné par le verrou. On obtient ainsi une libération simultanée sûre des rouleaux ou billes. Selon une forme de réalisation de l'invention, ledit organe est commandé par un doigt ou poussoir soumis à l'action dudit verrou.

L'invention sera bien comprise à la lecture de la description suivante faite en se référant au dessin annexé dans lequel :

- la figure 1 est une vue schématique en coupe transversale à travers une serrure selon un exemple de réalisation de l'invention, en position de verrouillage ;
- la figure 2 est analogue à la figure 1, pour la position de déverrouillage ;
- la figure 3 est une vue en coupe axiale de la serrure des figures 1 et 2, l'arbre de direction étant figuré en plan.

Le système de direction du véhicule comprend un arbre de direction 1 tourillonant dans une colonne de direction 2.

La serrure de blocage de direction comprend d'une manière générale un organe de verrouillage actionné par l'intermédiaire d'un verrou (non représenté) et mobile entre une position de déverrouillage dans laquelle il est écarté de l'arbre de direction 1 et une position de verrouillage dans laquelle il coopère avec ledit arbre 1.

Selon l'invention les organes de verrouillage comprennent deux rouleaux 3 ou billes disposés de part et d'autre de l'arbre de direction 1 à une distance inférieure au diamètre dudit arbre 1.

Lesdits rouleaux 3 ou billes sont rappelés élastiquement vers l'arbre 1 en étant logés et guidés dans un boîtier fixe 5 par rapport à l'arbre 1, par l'intermédiaire de moyens de guidage 10,5a,5b. Chaque rouleau 3 est soumis à l'action d'un organe de déverrouillage 7 commandé par ledit verrou et éloignant les rouleaux 3 de l'arbre 1 contre l'action de moyens de rappel, en l'occurrence des ressorts 4, vers une position où la corde de la section de l'arbre 1 passant par lesdits rouleaux est inférieure à l'écartement entre ces derniers.

Les moyens de guidage des rouleaux 3 ou billes dans le boîtier fixe 5 sont constitués par les parois 5a, 5b de deux logements borgnes 10 au fond duquel prennent appui les moyens de rappel 4.

Les logements 10 sont parallèles entre eux et s'étendent perpendiculairement à l'arbre de direction 1 de façon symétrique de part et d'autre dudit arbre.

Les parois respectives 5a de chacun des logements 10 tournées vers l'arbre de direction 1 sont écartées l'une de l'autre d'une distance inférieure à la somme du diamètre dudit arbre 1 et de deux fois le diamètre des rouleaux 3 ou billes.

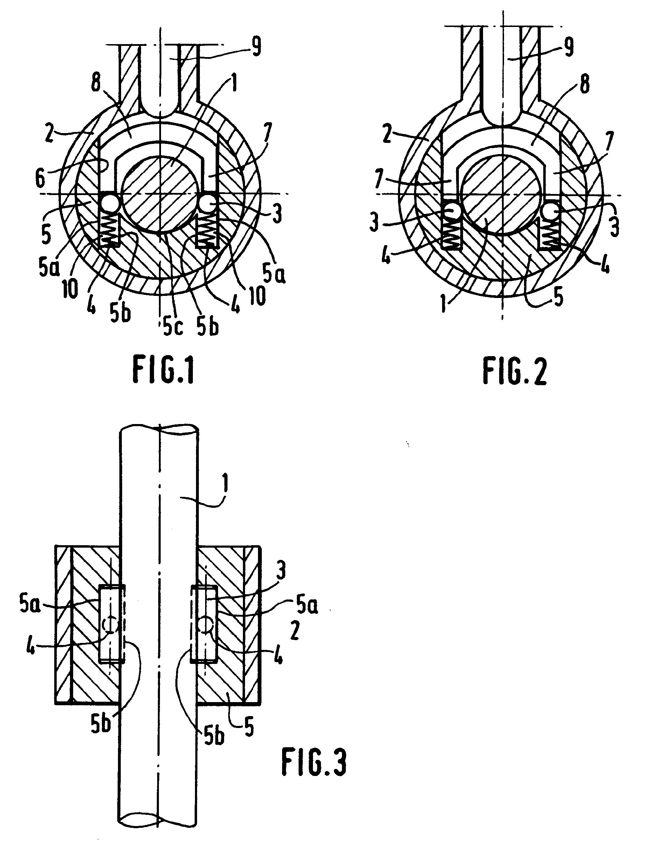

Sous l'effet des ressorts 4, les rouleaux 3 sont coincés contre l'arbre de direction 1 et un prolongement 6 des parois 5a des logements 10 du corps de boîtier 5. Si on tente de faire tourner l'arbre 1 dans le sens des aiguilles d'une montre (sur la figure 1), c'est le rouleau 3 de gauche qui se coince, et tout effort appliqué augmente l'encastrement du rouleau. Une tentative de rotation dans le sens inverse produit le coincement du rouleau de droite (sur la figure 1).

Les parois 5b de chacun des logements 10 tournées vers l'extérieur sont reliées par une paroi 5c du boîtier 5 présentant une concavité curviligne de manière à ce que la paroi 5c forme un berceau pour l'abre de direction 1.

Pour libérer l'arbre de direction, deux organes de déverrouillage 7 formant les extrémités d'une pièce 8 en forme de fourche sont poussés, par la translation d'un doigt 9 commandé par un verrou (non représenté) et repoussent les rouleaux 3, contre l'action des ressorts 4, en les éloignant de l'arbre 1. Le doigt 9 peut bien entendu être d'une seule pièce avec la fourche 8. Les organes de déverrouillage 7 peuvent aussi être indépendants et commandés séparément.

La serrure qui vient d'être décrite est d'une construction extrêmement simple et économique, peu encombrante. Elle est facile à commander du fait que la position de déverrouillage peut être atteinte par une simple translation du doigt 9 auquel peuvent être appliquées toutes les spécifications de sécurité auxquelles sont assujetties les serrures de direction pour automobiles.

## Revendications

1. Serrure de blocage de direction pour véhicule automobile du type comprenant des organes de verrouillage actionnés par l'intermédiaire d'un verrou et mobiles entre une position de déverrouillage dans laquelle ils sont écartés de l'arbre de direction et une position de verrouillage dans laquelle ils coopèrent avec ledit arbre de direction, lesdits organes de verrouillage comprenant deux rouleaux (3) ou billes rappelés élastiquement vers ledit arbre (1) en étant logés et guidés dans un boîtier fixe (5) par rapport à l'arbre de direction (1) par l'intermédiaire de moyens de guidage, chaque rouleau (3) ou bille étant soumis à l'action d'un organe de déverrouillage (7) commandé par ledit verrou et éloignant les billes ou les rouleaux (3) de l'arbre de direction (1) contre l'action des moyens de rappel (4), caractérisée en ce que les moyens de guidage des rouleaux (3) ou billes dans le boîtier fixe (5) sont constitués par les parois (5a, 5b) de deux logements borgnes (10) au fond duquel prennent appui les moyens de rappel (4), lesdits logements (10) étant parallèles entre eux et s'étendant perpendiculairement à l'arbre de direction (1) de façon symétrique de part et d'autre dudit arbre et en ce que les parois (5a) de chaque logement (10) tournées vers l'arbre de direction (1) sont écartées l'une de l'autre d'une distance inférieure à la somme du diamètre dudit arbre (1) et de deux fois le diamètre des rouleaux (3) ou billes, l'organe de déverrouillage (7) pouvant amener les rouleaux ou billes vers une position où la corde de la section dudit arbre passant par lesdits rouleaux ou billes est inférieure à l'écartement entre ces derniers.

2. Serrure selon la revendication 1, caractérisée en ce que les parois (5b) de chaque logement (10) tournées vers l'extérieur sont reliées par une paroi concave (5c) du boîtier (5), ladite paroi (5c) formant un berceau à l'arbre de direction (1).

3. Serrure selon la revendication 2, caractérisée en ce que les parois respectives (5b) de chaque logement (10) sont parallèles entre elles et suivant un écartement inférieur au diamètre de l'arbre (1).

4. Serrure selon les revendications 1, 2 et 3, caractérisée par le fait que les organes de déverrouillage (7) sont formés par deux branches d'un organe (8) en forme de fourche actionné par le verrou et guidé par un prolongement (6) des parois (5a) des logements (10) du boîtier fixe (5).

5. Serrure selon la revendication 4, caractérisée par le fait que ledit organe (8) est commandé par un doigt (9) ou poussoir soumis à l'action dudit verrou.

## Patentansprüche

1. Lenkschloß für ein Kraftfahrzeug, enthaltend Verriegelungsorgane, die durch einen Riegel betätigt werden und zwischen einer Freigabeposition, in der sie von der Lenkwelle entfernt sind, und einer Verriegelungsposition, in der sie mit der genannten Lenkwelle zusammenwirken, beweglich sind, wobei die genannten Verriegelungselemente zwei Rollen (3) oder Kugeln enthalten, die auf elastische Weise zu der genannten Welle (1) zurückgeholt werden und im Verhältnis zur Lenkwelle (1) in einem festen Gehäuse (5) durch Führungsmittel untergebracht und geführt sind, wobei jede Rolle (3) oder Kugel der Wirkung eines Freigabeorgans (7) ausgesetzt ist, welches durch den genannten Riegel betätigt wird und wodurch die Kugeln oder die Rollen (3) gegen die Wirkung der Rückholmittel (4) von der Lenkwelle (1) entfernt werden, **dadurch gekennzeichnet,** daß die Führungsmittel für die Rollen (3) oder Kugeln im feststehenden Gehäuse (5) aus den Wänden (5a, 5b) von zwei Blindaufnahmesitzen (10) bestehen, worauf die Rückholmittel (4) zur Auflage kommen, wobei die genannten Aufnahmesitze (10) parallel zueinander verlaufen und sich lotrecht zur Lenkwelle (1) beiderseits der genannten Welle symmetrisch erstrecken und daß die Wände (5a) jedes Aufnahmesitzes (10), die der Lenkwelle (1) zugewandt sind, einen bestand zueinander aufweisen, der kleiner ist als die Summe aus dem Durchmesser der genannten Welle (1) und dem zweifachen Durchmesser der Rollen (3) oder Kugeln, wobei das Freigabeorgan (7) die Rollen oder Kugeln in eine Position bringen kann, wo die Sehne des Querschnitts der genannten Welle, die durch die genannten Rollen oder Kugeln verläuft, kleiner ist als der bestand zwischen letzteren.

2. Schloß nach Anspruch 1, **dadurch gekennzeichnet,** daß die nach außen gerichteten Wände (5b) jedes Aufnahmesitzes (10) durch eine konkave Wand (5c) des Gehäuses (5) miteinander verbunden sind, wobei die genannte Wand (5c) einen Sattel für die Lenkwelle (1) bildet.

3. Schloß nach Anspruch 2, **dadurch gekennzeichnet,** daß die jeweiligen Wände (5b) jedes Aufnahmesitzes (10) parallel zueinander verlaufen und einen bestand haben, der geringer ist als der Durchmesser der Welle (1).

4. Schloß nach den Ansprüchen 1, 2 und 3, **dadurch gekennzeichnet,** daß die Freigabeorgane (7) aus zwei Schenkeln eines gabelförmigen Organs (8) bestehen, welches durch den Riegel betätigt und durch eine Verlängerung (6) der Wände (5a) der Aufnahmesitze (10) des feststehenden Gehäuses (5) betätigt wird.

5. Schloß nach Anspruch 4, **dadurch gekennzeichnet,** daß das genannte Organ (8) durch einen Finger (9) oder Schieber betätigt wird, der der Einwirkung des genannten Riegels ausgesetzt ist.

## Claims

1. A locking mechanism for the steering of a motor vehicle, of the type comprising locking members actuated by means of a lock and movable between an unlocked position, in which they are spaced away from the steering column, and a locked position in which they cooperate with the said steering column, the said locking members comprising two rollers (3) or balls biassed resiliently towards the said column (1), being received and guided by guide means in a housing (5) which is fixed with respect to the steering column (1), each roller (3) or ball being subjected to the action of an unlocking element (7) controlled by the said lock and displacing the balls or the rollers (3) away from the steering column (1) against the action of return means (4), characterised in that the guide means for the rollers (3) or balls in the fixed housing (5) comprise the walls (5a, 5b) of two blind cavities (10), on the base of which the return means (4) bear, the said cavities (10) being parallel to each other and extending at right angles to the steering column (1) symmetrically on either side of the said column, and in that the walls (5a) of each cavity (10) that face towards the steering column (1) are spaced from each other by a distance smaller than the sum of the diameter of the said column (1) and twice the diameter of the rollers (3) or balls, the unlocking element (7) being arranged to urge the rollers or balls towards a position in which the chord of the cross section of the said column intersecting the said rollers or balls is smaller than the spacing between the latter.

2. A locking mechanism according to Claim 1, characterised in that the walls (5b) of each cavity (10) facing outwardly are joined together by means of a concave wall (5c) of the housing (5), the said wall (5c) defining a cradle for the steering column (1).

3. A locking mechanism according to Claim 2, characterised in that the respective walls (5b) of each cavity (10) are parallel to each other and are spaced apart by a distance smaller than the diameter of the column (1).

4. A locking mechanism according to Claims 1, 2 and 3, characterised by the fact that the unlocking elements (7) are defined by two branches of a fork-shaped member (8) actuated by the lock and guided by an extension (6) of the walls (5a) of the cavities (10) of the fixed housing (5).

5. A locking mechanism according to Claim 4, characterised by the fact that the said member (8) is controlled by a finger (9) or pusher which is subjected to the action of the said lock.

FIG.1

FIG.2

FIG.3